# EUROPÄISCHE PATENTSCHRIFT

(11) **EP 2 948 499 B1**
(45) Veröffentlichungstag und Bekanntmachung des Hinweises auf die Patenterteilung: **14.06.2017**
(21) Anmeldenummer: 14701948.3
(22) Anmeldetag: 21.01.2014
(51) Int. Cl.: C08J 5/24

(54) **IMPRÄGNIERTES VERSTÄRKUNGSFASERGARN UND DESSEN VERWENDUNG ZUR HERSTELLUNG VON VERBUNDWERKSTOFFEN**
IMPREGNATED REINFORCING SPUN YARN AND USE OF SAME FOR PRODUCING COMPOSITE MATERIALS
FIBRES DE RENFORCEMENT IMPRÉGNÉES ET LEUR UTILISATION POUR LA FABRICATION DE MATIÈRES COMPOSITES

(30) Priorität: 28.01.2013 EP 13152863
(43) Veröffentlichungstag der Anmeldung: 02.12.2015
(73) Patentinhaber: Toho Tenax Europe GmbH, 42103 Wuppertal (DE)
(72) Erfinder: KUMMER-DÖRNER, Sabine, 58332 Schwelm (DE); STÜSGEN, Silke, 41464 Neuss (DE); WITZEL, Silke, 45665 Recklinghausen (DE); PUSCH, Jens, 41844 Wegberg (DE); SCHNEIDER, Markus, 40470 Düsseldorf (DE); WOHLMANN, Bernd, 40627 Düsseldorf (DE)
(74) Vertreter: CPW GmbH
(86) Internationale Anmeldenummer: PCT/EP2014/051084
(87) Internationale Veröffentlichungsnummer: WO 2014/114617

(56) Entgegenhaltungen:
- WO-A1-98/50211
- US-A- 6 117 551
- US-A1- 2004 241 441
- US-A1- 2007 196 636
- US-A1- 2011 259 514
- US-A1- 2012 052 284
- US-A1- 2012 328 858
- US-B1- 6 228 474
- DATABASE WPI Week 199324 Thomson Scientific, London, GB; AN 1993-191593 XP002699870, & JP H05 117423 A (ASAHI CHEM IND CO LTD) 14. Mai 1993 (1993-05-14)

## Beschreibung

Die Erfindung betrifft ein vorimprägniertes Gam, bestehend aus einem Bündel aus Verstärkungsfaserfilamenten mit einem Bündelinneren und einer Bündelaußenseite, wobei die Verstärkungsfaserfilamente mit einem in das vorimprägnierte Garn infiltrierten ersten Harzzusammensetzung imprägniert sind, die mehrfach aufschmelzbar und durch Abkühlen auf Raumtemperatur in den festen Zustand überführbar ist. Die Erfindung betrifft des Weiteren eine textile Struktur, welche ein solches Garn umfasst.

Insbesondere im Bereich der Luft- und Raumfahrtindustrie, aber auch z.B. im Bereich des Maschinenbaus, der Windkraft- oder der Automobilindustrie, werden in zunehmendem Maße Bauteile aus Faserverbundwerkstoffen eingesetzt. Faserverbundwerkstoffe bieten gegenüber Metall oftmals den Vorteil eines geringeren Gewichts und/oder höherer Festigkeiten. Ein wesentlicher Aspekt ist dabei gleichzeitig eine kostengünstige Herstellung von derartigen belastbaren und dennoch leichtgewichtigen Verbundwerkstoff-Bauteilen. Im Hinblick auf die Belastbarkeit, d.h. im Hinblick auf die Steifigkeit und die Festigkeit haben bei den Verbundwerkstoff-Bauteilen der Volumenanteil der Verstärkungsfasern und insbesondere auch die Ausrichtung der Verstärkungsfasern maßgeblichen Einfluss.

Ein häufig eingesetztes Fertigungsverfahren basiert derzeit auf der sogenannten Prepregtechnologie. Hierbei werden die Verstärkungsfasern wie z.B. Glasfasern oder Kohlenstofffasern beispielsweise zueinander parallel angeordnet, in ein Matrixharz eingebettet und zu bahnförmigen Halbzeugen verarbeitet. Für die Bauteilfertigung werden diese Bahnen entsprechend der Bauteilkontur zugeschnitten und maschinell oder von Hand Schicht für Schicht unter Berücksichtigung der für die Bauteilbelastungen erforderlichen Orientierung der Verstärkungsfasern in ein Werkzeug laminiert. Anschließend erfolgt die Aushärtung der Matrix unter Druck und Temperatur in einem Autoklaven. Prepregs (englische Abkürzung für pre-impregnated fibers) weisen in der Regel bereits beide Komponenten (Faser und Matrixharz) im endgültigen Mischungsverhältnis auf und sind daher bereits als Halbfertigprodukt biegesteif. Um vorzeitige, ungewollte Reaktionen zu verhindern, muss dieses Material zudem gekühlt gelagert werden und verfügt dennoch nur über eine begrenzte Lagerzeit. Aufgrund der Biegesteifigkeit und der Herstellung als breite Rollenware sind die Anwendungsfälle von Prepregs auf großflächige und nahezu ebene Bauteile beschränkt. Das bereits vorhandene Matrixharz erlaubt keine textile Verarbeitung und keine faltenfreie Ablage der Prepregs beispielsweise entlang von engen Radien oder auf stark konturierten Geometrien.

Beispiele um zu imprägnierten Garnprodukten mit verbesserter textiler Verarbeitbarkeit zu gelangen werden z.B. in der US-A-5 275 883 und der US-A-4 614 678 beschrieben, die mit einer Beschichtung versehene Verstärkungsfasergarne offenbaren. Die Verstärkungsfasergarne werden gemäß diesen Schriften zunächst mit einer Mischung eines Polymerpulvers beaufschlagt und anschließend mit einer Hülle vorzugsweise aus einem thermoplastischen Polymer überzogen, um das Polymerpulver im Inneren zu stabilisieren. Diese Garnmaterialien weisen zwar eine gewisse Flexibilität auf, sind jedoch infolge der durchgehenden thermoplastischen Hülle dennoch relativ starr und daher für z.B. textile Weiterverarbeitungsverfahren nur bedingt geeignet.

Ähnliche Produkte werden in der EP-A 0 554 950 A1 offenbart, die ein Verfahren betrifft, bei dem zunächst ein offenes Garnbündel von Verstärkungsfasern mit einem thermoplastischen Polymerpulver imprägniert und anschließend das imprägnierte Faserbündel mit einer durchgehenden Hülle eines thermoplastischen Polymers versehen wird. Das resultierende umhüllte Bündel wird bei einer Temperatur oberhalb der Erweichungstemperatur des Thermoplasten kalandriert, wonach das Bündel schließlich zu einem Granulat geschnitten wird. Das Granulat dient der Herstellung von Verbundkörpern über Verfahren wie z.B. Extrusion oder Spritzguss.

In der EP-A-0 814 916 B1 werden sogenannte Garnprepregs ("Towpregs") beschrieben, die für die Verwendung in textilen Vorformprozessen geeignet sind, wobei zu solchen textilen Vorformprozessen u.a. Web-, Flecht- oder Wirkprozesse oder Wickelverfahren ("filament winding") gehören, oder die zu Kurzschnitt verarbeitet werden können. Die Garnprepregs der EP-A-0 814 916 B1 umfassen eine Vielzahl von Fasern sowie eine Beschichtung aus Matrixharz, wobei die Fasern in einer Anordnung innerer Fasern, die im Wesentlichen frei von Matrixharz sind, und äußerer Fasern strukturiert sind, wobei die äußeren Fasern zumindest teilweise in einer nicht-durchgehenden Hülle aus dem Matrixharz eingebettet sind. Die Herstellung der Garnprepregs erfolgt durch Aufbringen eines pulverförmiger Partikel des Matrixharzes auf die äußeren Fasern und anschließendes partielles Aufschmelzen der Matrixharzpartikel. Bei dem eingesetzten Matrixharz kann es sich um ein duromeres oder ein thermoplastisches Material handeln.

Auch die US-A-6 228 474 beschäftigt sich mit der Herstellung von Garnprepregs aus mit einer Epoxidharzzusammensetzung imprägnierten Verstärkungsfaserbündeln, wobei der Harzanteil in den Garnprepregs im Bereich von 20 bis 50 Gew.-% liegt. Die Epoxidharzzusammensetzung kann in einer Ausführungsform zwei oder mehr Epoxidharze umfassen und eine Mischung aus mono- oder bifunktionellen mit tri-oder höherfunktionellen Epoxidharzen sein. Diese Epoxidharzzusammensetzung umfasst des Weiteren feine Partikel eines in den Epoxidharzen unlöslichen Kautschukmaterials sowie Härterkomponenten für die Epoxidharze.

Garnprepregs müssen einen genügend hohen Anteil an Matrixharz aufweisen, typischerweise mehr als 15 Vol.-%, um die Konsolidierung zu i.w. lunker- bzw. porenfreien Bauteilstrukturen zu erlauben, ohne dass weiteres Matrixharz zugefügt werden muss. Derartige Garnprepregs weisen zwar gegenüber bahnförmigen Prepregs eine höhere Flexibilität auf. Vor allem wegen ihres hohen Matrixharzanteils sind sie jedoch in textilen Prozessen nur eingeschränkt weiter verarbeitbar. Darüber hinaus führt das Vorhandensein des Matrixharzes meist zu einer verstärkten Klebrigkeit der Garnprepregs, woraus ein erhöhter Aufwand bei der Handhabung dieser Garnprepregs resultiert. Außerdem ist in der Regel eine dauerhafte Kühlung der Garnprepregs bis zum Zeitpunkt der Weiterverarbeitung erforderlich, um eine unkontrollierte Aushärtung des Matrixharzes zu vermeiden. Schließlich weisen Garnprepregs Nachteile bei der Herstellung dreidimensionaler Strukturen auf und können beispielsweise nicht wiederholt umgeformt werden.

In zunehmendem Maße werden Faserverbundbauteile aus Verstärkungsfasern über sogenannte endkonturnahe Faservorformlinge ("Preforms") hergestellt. Im Wesentlichen handelt es sich bei diesen Faservorformlingen um textile Halbzeuge in Form von zwei- oder dreidimensionalen Gebilden aus Verstärkungsfasern, in die in weiteren Schritten zur Herstellung des Faserverbundbauteils ein geeignetes Matrixmaterial über Infusion oder Injektion, auch unter Anwendung von Vakuum eingebracht wird. Abschließend erfolgt eine Aushärtung des Matrixmaterials bei in der Regel erhöhten Temperaturen und Drücken zum fertigen Bauteil. Bekannte Verfahren zur Infusion oder Injektion des Matrixmaterials sind hier das sogenannte Liquid Molding (LM-Verfahren) oder damit verwandte Verfahren wie z.B. Resin Transfer Molding (RTM), Vacuum Assisted Resin Transfer Molding (VARTM), Resin Film Infusion (RFI), Liquid Resin Infusion (LRI) oder Resin Infusion Flexible Tooling (RIFT). Für diese Anwendungen werden Verstärkungsfasern eingesetzt, die noch nicht mit Matrixharz in den für das spätere Verbundbauteil benötigten Menge versehen sind, da das Matrixmaterial, wie zuvor ausgeführt wurde, in einem nachfolgenden Prozessschritt in den fertigen Faservorformling eingebracht wird. Andererseits ist es von Vorteil, wenn das für die Herstellung der Faservorformlinge verwendete Fasermaterial bereits z.B. mit geringen Mengen eines z.B. aushärtbaren oder bei Temperaturerniedrigung fest werdenden Kunststoffmaterials, d.h. eines Bindermaterials, vorimprägniert sind, um die Fixierung der Verstärkungsfasern im Faservorformling zu verbessern und dem Faservorformling eine genügende Stabilität zu verleihen.

Die WO 98/50211 betrifft für den Einsatz bei der Herstellung von Faservorformlingen geeignete, mit einem Bindermaterial beschichtete Verstärkungsfasern, bei denen das Bindermaterial in Form von Partikeln oder diskreten Bereichen auf der Oberfläche der Verstärkungsfasern aufgebracht ist. Das Bindermaterial besteht zu 40 bis 90 Gew.-% aus einem duromeren Harz und zu 10 bis 60 Gew.-% aus einem Thermoplast, der auf das im späteren aus dem Faservorformling hergestellten Faserverbundbauteil eingesetzte Matrixmaterial abgestimmt ist. Das auf die Verstärkungsfasern aufgetragene Bindermaterial ist bei Raumtemperatur fest und nicht-klebrig. Gemäß der WO 98/50211 weisen die so beschichteten Verstärkungsfasern oder z.B. daraus hergestellte Gewebe eine gute Drapierbarkeit auf. Gemäß der WO 98/50211 können die einzelnen Garnstränge zunächst mit dem Bindermaterial versehen werden und anschließend zu Geweben verarbeitet werden. Für die Herstellung von flachen Garnsträngen mit einer fixierten Garnbreite, die einer automatisierten direkten Verarbeitung zu Faservorformlingen zugängig wären, sind die Garne der WO 98/50211 nicht geeignet. Darüber hinaus können die mit Bindermaterial beschichteten Verstärkungsfasern der WO 98/50211 z.T. relativ hohe Anteile an Bindermaterial von bis zu 20 Gew.-% aufweisen, wodurch es zu signifikant verschlechtertem Imprägnierverhalten daraus hergestellter Faservorformlinge kommen kann.

Vorimprägnierte Garne für die Herstellung von Faservorformlingen werden auch in der WO 2005/095080 beschrieben. Bei den Garnen der WO 2005/095080 sind die Filamente der vorimprägnierten Garne über eine Harzzusammensetzung zumindest teilweise verbunden, wobei die Garne, bezogen auf ihr Gesamtgewicht 2,5 bis 25 Gew.-% der Harzzusammensetzung aufweisen, wobei die Harzzusammensetzung aus einer Mischung von mindestens zwei Epoxidharzen besteht, und wobei die Epoxidharze sich hinsichtlich ihres Epoxidwerts und hinsichtlich ihres Molekulargewichts unterscheiden. Das Gewichtsverhältnis der Epoxidharze in der Mischung wird so gewählt, dass die Harzzusammensetzung einen Epoxidwert zwischen 550 und 2100 mmol/kg Harz aufweist. Alternativ wird eine Mischung von drei Bisphenol A Epichlorhydrin-Harzen mit definierten Eigenschaften der Harze hinsichtlich Epoxidwert, Molekulargewicht und Schmelzpunkt vorgeschlagen. Die Harzzusammensetzungen werden so gewählt, dass sie mehrfach aufschmelzbar und durch Abkühlen auf Raumtemperatur wieder in den festen Zustand überführbar sind und dass die damit vorimprägnierten Garne bei Raumtemperatur nicht klebrig sind, bei erhöhten Temperaturen jedoch eine Klebrigkeit aufweisen. Es zeigt sich jedoch, dass mit den Harzzusammensetzungen der WO 2005/095080 imprägnierten Garne nicht für alle Anwendungen, z.B. für Anwendungen, bei denen Garne unter einem Winkel von beispielsweise 90° übereinander abgelegt werden, eine ausreichende Klebrigkeit aufweisen.

Es besteht daher ein Bedarf nach verbesserten vorimprägnierten Garnen für die Herstellung von Faservorformlingen. Daher ist es Aufgabe der vorliegenden Erfindung, derartige verbesserte vorimprägnierte Verstärkungsfasergarne insbesondere für den Einsatz bei der Herstellung von Faservorformlingen zur Verfügung zu stellen.

Die Aufgabe wird durch ein vorimprägniertes Garn gelöst, bestehend aus einem Bündel aus Verstärkungsfaserfilamenten mit einem Bündelinneren und einer Bündelaußenseite,
- wobei die Verstärkungsfaserfilamente mit einer in das vorimprägnierte Garn infiltrierten ersten Harzzusammensetzung imprägniert sind und die Filamente des vorimprägnierten Garns über die erste Harzzusammensetzung zumindest teilweise verbunden sind und
   - wobei die erste Harzzusammensetzung mindestens ein Urethanharz H1, hergestellt aus einer Reaktion einer bifunktionellen aromatischen Epoxidverbindung auf Basis Bisphenol A, einem aromatischen Polyisocyanat und einem Polyalkylenglykol, und ein oxyalkyliertes Bisphenol A Harz H2, enthält
   - die Harze H1 und H2 in einem Gewichtsverhältnis H1:H2 von 1 bis 15 vorliegen und
   - die Mischung der Harze H1 und H2 bei Raumtemperatur eine Viskosität von 10 bis 10.000 Pa s aufweist,
wobei das vorimprägnierte Garn dadurch gekennzeichnet ist,
- dass es, bezogen auf sein Gesamtgewicht, 0,1 bis 4 Gew.-% der ersten Harzzusammensetzung aufweist und die erste Harzzusammensetzung des Weiteren einen aromatischen Polyhydroxyether P1 enthält, welcher eine Säurezahl von 40 bis 55 mg KOH/g und ein mittleres Molekulargewicht M_{N} von 4000 bis 5000 g/mol aufweist, und dass
- das vorimprägnierte Garn an der Bündelaußenseite eine zweite Harzzusammensetzung in Form von an den Verstärkungsfaserfilamenten anhaftenden Partikeln oder Tropfen aufweist,
   - wobei die zweite Harzzusammensetzung bei Raumtemperatur fest ist, eine Schmelztemperatur im Bereich von 80 bis 150 °C aufweist und auf der Bündelaußenseite in einer Konzentration von 0,5 bis 14 Gew.-%, bezogen auf das Gesamtgewicht des vorimprägnierten Garns, vorliegt,
   - wobei mindestens 40 % der Fläche der Bündelaußenseite frei von der zweiten Harzzusammensetzung sind und
   - wobei das Bündelinnere frei von der zweiten Harzzusammensetzung ist.

Es zeigt sich, dass das so vorimprägnierte Garn eine ausgezeichnete Dimensionsstabilität besitzt und mehrfach aufschmelzbar und durch Abkühlen auf Raumtemperatur wieder in einen festen oder quasi festen Zustand überführbar ist. Darüber hinaus kann bei den erfindungsgemäßen Garnen das Harz so ausgewählt werden, dass das damit beschichtete Garn bei Raumtemperatur nicht klebrig ist.

Hierbei wird unter einem nicht-klebrigen Zustand ein Zustand verstanden, wie er z.B. auch bei kommerziell erhältlichen Standard-Kohlenstofffasern vorliegt und der ein problemloses Abwickeln z.B. von Spulenkörpern ermöglicht. Deshalb ist ein solches Garn dann nicht nur aufwickelbar, sondern im aufgewickelten Zustand unter Erhalt seiner textilen Eigenschaften lagerbar und selbst nach langer Lagerzeit bei Raumtemperatur wieder abwickelbar. Beispielsweise lässt sich das erfindungsgemäße Garn nach 12 Monaten Lagerzeit problemlos abwickeln und zeigt höchstens unwesentlich veränderte Werte der nach DIN 65 382 gemessenen Eigenschaften Festigkeit, E-Modul und Bruchdehnung. In einer bevorzugten Ausgestaltung ist die erste und/oder die zweite Harzzusammensetzung frei von Härtern.

Bei dem erfindungsgemäßen Garn kann es sich um ein Garn aus Kurzfaserfilamenten oder um ein Garn aus Endlosfilamenten handeln. Im Falle, dass das Garn aus Endlosfilamenten besteht, kann die Anzahl der Filamente vorzugsweise im Bereich von 6000 bis 48000 Filamenten und besonders bevorzugt im Bereich von 12000 bis 24000 Filamenten liegen. Ebenso sind Garne mit einem Titer im Bereich von 400 bis 32000 tex bevorzugt und besonders bevorzugt solche Garne mit einem Titer im Bereich von 800 bis 16000 tex.

In einer weiteren bevorzugten Ausführungsform handelt es sich bei dem erfindungsgemäßen Garn um ein Kohlenstofffasergarn, das aus Pech-, Polyacrylnitril-, Lignin- oder Viskosevorprodukten gewonnen wurde, oder um ein Aramid-, Glas-, Keramik-, oder Borfasergarn, ein Synthesefasergarn oder ein Naturfasergarn oder eine Kombination aus einem oder mehreren dieser Fasern. Besonders bevorzugt handelt es sich bei dem erfindungsgemäßen Garn um ein Kohlenstofffasergarn.

Die erfindungsgemäßen Garne weisen eine erste Harzzusammensetzung auf, deren eine Komponente ein Urethanharz, H1, ist. Derartig vorimprägnierte Garne aus Verstärkungsfaserfilamenten weisen eine gute Haltbarkeit auf sowie insbesondere auch eine gute Kompatibilität zu vielfach bei der Herstellung von Verbundwerkstoffen eingesetzten Urethanharz-Matrices.

Das erfindungsgemäß eingesetzte Urethanharz H1 ist aus einer Reaktion einer bifunktionellen aromatischen Epoxidverbindung auf Basis Bisphenol A, einem aromatischen Polyisocyanat und einem Polyalkylenglykol hergestellt. Als bifunktionelle aromatische Epoxidverbindung auf Basis Bisphenol A wird bevorzugt ein Bisphenol-A-Epichlorhydrin-Harz mit einem Molgewicht von 600-1200g/mol eingesetzt. Als aromatischem Polyisocyanat können vorzugsweise Diisocyanate wie insbesondere Toluylendiisocyanat verwendet werden und als Polyalkylenglykol lassen sich Polyethylenglykol, Polypropylenglykol, Polybutylenglykol oder ähnliche Verbindungen einsetzen. Bevorzugte Urethanharze sind solche mit einem Epoxidwert von 250-1000 mmol/kg und besonders bevorzugt von 400-900 mmol/kg, die über die Reaktionssteuerung bei der Herstellung des Urethanharzes zu erhalten werden können.

Das oxyalkylierte Bisphenol A Harz H2 kann vorzugsweise ein Reaktionsprodukt aus Bisphenol A und einem Alkylenoxid wie z.B. Ethylenoxid oder Propylenoxid oder Mischungen davon sein.

Um einerseits einen stabilen Zusammenhalt der Filamente des vorimprägnierten Garns, andererseits aber auch eine gute Flexibilität und Drapierfähigkeit des Garns zu erhalten, weist die Mischung der Harze H1 und H2 bei Raumtemperatur eine Viskosität von 10 bis 10.000 Pa s auf. Vorzugsweise liegt die Viskosität im Bereich von 100 bis 5.000 Pa s. Die Viskosität der Mischung der Harze H1 und H2 kann über die dem Urethanharz zu Grunde liegenden Reaktanden wie insbesondere der eingesetzten aromatischen Epoxidverbindung auf Basis Bisphenol A oder über das Gewichtsverhältnis H1:H2 der Harze H1 und H2 eingestellt werden. In einer bevorzugten Ausführungsform liegen die Harze H1 und H2 in einem Gewichtsverhältnis H1:H2 im Bereich von 3 bis 12 vor.

Wie ausgeführt, verfügt das erfindungsgemäße Garn über eine hohe Dimensionsstabilität, wobei hierunter zu verstehen ist, dass das Garn eine stabile, fixierte Garnbreite bzw. ein stabiles Verhältnis von Garnbreite zu Garndicke aufweist, das auch erhalten bleibt, wenn das erfindungsgemäße Garn frei über größere Distanzen unter Spannung gehalten wird oder in textilen Prozessen weiter verarbeitet wird. Aufgrund dieser ausgezeichneten Dimensionsstabilität wird eine automatisierte Verarbeitung, beispielsweise ein automatisiertes Ablegen zur Ausbildung von Faservorformlingen ermöglicht. Darüber hinaus führt die fixierte und beständige Garnbreite der erfindungsgemäßen Garne zu stabileren Verklebungen übereinandergelegter Garne bei der Herstellung von Faservorformlingen. Es wurde festgestellt, dass die Dimensionsstabilität des erfindungsgemäßen Garns maßgeblich eine Folge der ersten Harzzusammensetzung ist, mit der das vorimprägnierte Garn infiltriert ist, wobei der Anteil des aromatischen Polyhydroxyethers P1 eine maßgebliche Rolle spielt.

In einer bevorzugten Ausführungsform enthält die erste Harzzusammensetzung hierbei das Urethanharz H1 und das oxyalkylierte Bisphenol A Harz H2 in einem Gewichtsverhältnis (H1+H2):P1 von 0,05 bis 20 zu dem aromatischen Polyhydroxyether P1 und besonders bevorzugt in einem Gewichtsverhältnis von 0,25 bis 10. Es wurde in Untersuchungen beobachtet, dass es bei Gewichtsverhältnissen kleiner 0,05 zu erhöhtem Garnabrieb kommen kann. Gewichtsverhältnisse von größer 20 hingegen führen zu Garnen mit einer zu geringen Formstabilität. Im Hinblick auf die Dimensionsstabilität auf der einen Seite und die Drapierbarkeit auf der anderen Seite ist es auch von Vorteil, wenn die erste Harzzusammensetzung in einer Konzentration von 0,4 bis 3 Gew.-%, bezogen auf das Gesamtgewicht des vorimprägnierten Garns, vorliegt.

In einer bevorzugten Ausführungsform enthält die erste Harzzusammensetzung des Weiteren einen Ester H3 einer langkettigen gesättigten monofunktionellen Carboxylsäure und eines aliphatischen monofunktionellen Alkanols. Langkettige gesättigte monofunktionelle Carboxylsäuren sind vorzugsweise n-Carboxylsäuren mit insgesamt 5 bis 20 und besonders bevorzugt mit insgesamt 15 bis 20 C-Atomen, wobei die langkettigen gesättigten monofunktionellen Carboxylsäuren auch als Mischung verschiedener dieser Carboxylsäuren vorliegen können. Bevorzugte Beispiele sind etwa n-Hexadecansäure oder n-Octadecansäure oder ähnliche Verbindungen. Der aliphatische monofunktionelle Alkanol kann vorzugsweise ein linearer oder ein verzweigter aliphatischer Alkohol sein, bevorzugt mit insgesamt 2 bis 15 und besonders bevorzugt mit 3 bis 10 C-Atomen. Verzweigte aliphatische Alkohole wie Isopropanol oder Isooctanol sind bestens geeignet. Vorteilhafte Ester H3 sind z.B. Isopropylstearat, Isobutylstearat oder Isooctylstearat usw. oder entsprechende Ester der n-Pentadekansäure, der n-Hexadekansäure, der Heptadekansäure usw.. Durch den Zusatz eines Esters H3 lässt sich eine Verbesserung des Garnabriebverhaltens des vorimprägnierten Garns erreichen. Dabei ist es von Vorteil, wenn die Konzentration des Esters H3 im Bereich von 0,001 bis 0,5 Gew.-%, bezogen auf das Gesamtgewicht des vorimprägnierten Garns vorliegt. Ebenso ist bevorzugt, wenn die Komponenten H1, H2 und H3 der ersten Harzzusammensetzung zu dem aromatischen Polyhydroxyether P1 im Verhältnis (H1+H2+H3):P1 im Bereich von 0,05 bis 20, bevorzugt im Bereich von 0,25 bis 10 vorliegen.

Es ist ebenso bevorzugt, wenn die erste Harzzusammensetzung des Weiteren ein Bisphenol A Epichlorhydrin-Harz H4 und ein Bisphenol A Epichlorhydrin-Harz H5 in einem Gewichtsverhältnis H4:H5 von 1,1 bis 1,4 enthält, wobei H4 einen Epoxidwert von 1850 bis 2400 mmol/kg und ein mittleres Molekulargewicht M_{N} von 800 bis 1000 g/Mol aufweist und bei Raumtemperatur fest ist, und H5 einen Epoxidwert von 5000 bis 5600 mmol/kg und ein mittleres Molekulargewicht M_{N} von < 700 g/Mol aufweist und bei Raumtemperatur flüssig ist. In diesem Fall liegt das Verhältnis (H1+H2) der Komponenten H1und H2 bzw. bei Vorhandensein eines Esters H3 das Verhältnis (H1+H2+H3) der Komponenten H1, H2 und H3 der ersten Harzzusammensetzung zu (H4+H5+P1) der weiteren Komponenten der ersten Harzzusammensetzung vorzugsweise im Bereich von 0,05 bis 20, vorzugsweise von 0,25 bis 10.

Das erfindungsgemäße Garn kann bereits bei seiner Herstellung auf einfache Weise in die Form eines flachen Bandes gebracht werden, indem das zunächst nicht imprägnierte, leicht spreizbare Garn über geeignete Spreizorgane in und durch ein Bad geführt und mit der ersten Harzzusammensetzung imprägniert wird. Die erste Harzzusammensetzung verbindet dabei die Filamente des Garns zumindest teilweise und sorgt für einen sehr guten Zusammenschluss. Außerdem verleiht die erste Harzzusammensetzung aufgrund ihrer Zusammensetzung dem gespreizten und nunmehr imprägnierten Garn seine hohe Dimensionsstabilität, wodurch die Bändchenform erhalten bleibt und das Garn in dieser Form nach der Aufbringung der zweiten Harzzusammensetzung z.B. auf Spulen aufgewickelt werden kann. Im späteren kann dann das erfindungsgemäße vorimprägnierte Garn ohne zusätzliche Maßnahmen, wie z.B. die Überleitung über geeignete Spreizorgane, mittels üblicher Ablegeverfahren zur Herstellung von textilen Strukturen, wie z.B. von zwei- oder dreidimensionalen Faservorformlingen oder von zweidimensionalen Strukturen beispielsweise in Gestalt von unidirektionalen Geweben oder Multiaxialgelegen, verarbeitet werden. Die hohe Dimensionsstabilität ermöglicht, dass in einer vorteilhaften Ausführung des vorimprägnierten Garns dieses als flaches Band vorliegt, das ein Verhältnis von Garnbreite zu Garndicke von mindestens 10 aufweist. In einer besonders bevorzugten Ausführungsform weist das flache Band ein Verhältnis von Garnbreite zu Garndicke im Bereich 12 bis 60 auf.

Durch die an der Bündelaußenseite aufgebrachte zweite Harzzusammensetzung wird bei den erfindungsgemäßen vorimprägnierten Garnen erreicht, dass diese bei Raumtemperatur nicht klebrig sind und, wie beschrieben, z.B. aufwickelbar sind. Bei erhöhter Temperatur wird jedoch durch die zweite Harzzusammensetzung eine hohe Klebrigkeit erreicht, die auch bei Aufbauten, bei denen die erfindungsgemäßen Garne unter einem Winkel übereinander abgelegt werden, nach Abkühlung zu einer hohen Stabilität des Aufbaus des Faservorformling führen. Mit Hilfe des erfindungsgemäßen Garns lassen sich daher Vorformlinge herstellen, ohne dass in aufwendiger Weise Bindermaterial zur Fixierung der Garne zusätzlich hinzugefügt werden muss, wobei dennoch eine bessere Bindung zwischen den Garnen resultiert als bei einem Vorformling des Standes der Technik.

Gleichzeitig wurde gefunden, dass bei der angegebenen Konzentration der zweiten Harzzusammensetzung insbesondere die Art des Auftrags der zweiten Harzzusammensetzung in Form von an den Verstärkungsfaserfilamenten anhaftenden Partikeln oder Tropfen, wobei mindestens 40 % der Fläche der Bündelaußenseite frei von der zweiten Harzzusammensetzung sind und wobei das Bündelinnere frei von der zweiten Harzzusammensetzung ist, zu vorimprägnierten Garnen mit hoher Flexibilität und guter Drapierfähigkeit führen. Dabei zeigt sich, dass es von Vorteil ist, wenn die an den Verstärkungsfaserfilamenten anhaftenden Partikel oder Tropfen der zweiten Harzzusammensetzung eine Größe von weniger als 300 µm aufweisen, und von besonderem Vorteil, wenn sie eine mittlere Größe im Bereich von 20 bis 150 µm aufweisen. Insbesondere mit Blick auf die Drapierfähigkeit hat es sich auch als vorteilhaft erwiesen, wenn die Konzentration der zweiten Harzzusammensetzung auf der Bündelaußenseite im Bereich von 1 bis 10 Gew.-%, bezogen auf das Gesamtgewicht des vorimprägnierten Garns, liegt, und als besonders vorteilhaft, wenn sie im Bereich von 1,5 bis 7 Gew.-% liegt.

Zur Erzielung insbesondere der Eigenschaften des vorliegenden Garns hinsichtlich seiner Klebrigkeit bzw. seiner Haftfestigkeit enthält in einer bevorzugten Ausführungsform die zweite Harzzusammensetzung zu mindestens 50 Gew.-% ein Bisphenol A Epichlorhydrin-Harz H6 mit einem Epoxidwert von 480 bis 645 mmol/kg und einem mittleren Molekulargewicht M_{N} von 2700 bis 4000 g/Mol, einen aromatischen Polyhydroxyether P2, ein Polyamid, ein Polyethylen, ein Ethylen-Copolymer wie z.B. ein Ethylenvinylacetat (EVA)-Copolymer oder ein thermoplastisches Polyurethanharz oder Mischungen dieser Verbindungen, wobei diese Verbindungen eine Schmelztemperatur im Bereich von 80 bis 150°C aufweisen. Dabei sind auch Ausführungsformen umfasst, bei denen z.B. das Bisphenol A Epichlorhydrin-Harz H6 eine Mischung von zwei oder mehr Bisphenol A Epichlorhydrin-Harzen ist, solange die Mischung einen Epoxidwert von 480 bis 645 mmol/kg und ein mittleres Molekulargewicht M_{N} von 2700 bis 4000 g/Mol und eine Schmelztemperatur im Bereich von 80 bis 150 °C aufweist.

Besonders bevorzugt enthält die zweite Harzzusammensetzung die zuvor genannten Verbindungen zu mindestens 80 Gew.-% und ganz besonders bevorzugt zu mindestens 90 Gew.-%. In einer besonders geeigneten Ausführungsform besteht die zweite Harzzusammensetzung aus den genannten Verbindungen oder aus Mischungen der genannten Verbindungen.

Der in der zweiten Harzzusammensetzung eingesetzte aromatische Polyhydroxyether P2 und der in der ersten Harzzusammensetzung enthaltene aromatische Polyhydroxyether P1 können gleich oder unterschiedlich sein. Für den aromatischen Polyhydroxyether P2 muss jedoch gleichzeitig die Bedingung erfüllt sein, dass er eine Schmelztemperatur im Bereich von 80 bis 150 °C aufweist.

Zur Erzielung einer genügend hohen Haftfestigkeit der vorimprägnierten Garne bei der Herstellung von Faservorformlingen besitzt die zweite Harzzusammensetzung oberhalb ihres Schmelzpunktes eine gute Klebkraft bzw. Adhäsionsfestigkeit. In einer bevorzugten Ausführungsform weist die zweite Harzzusammensetzung bei einer Temperatur von 20°C oberhalb der Schmelztemperatur eine Adhäsionsfestigkeit bzw. Klebkraft von mindestens 5 N auf, bezogen auf eine Klebefläche mit einem Durchmesser von 25 mm. Die Bestimmung der Klebkraft bzw. der Adhäsionskraft erfolgt in Anlehnung an die ASTM D 2979. Hierbei wird als Kleb- oder Adhäsionskraft die Kraft angesehen, die benötigt wird, um eine Probe der zweiten Harzzusammensetzung von einer Klebefläche kurz nach In-Kontakt-Bringen von zweiter Harzzusammensetzung und Klebefläche unter einer definierten Belastung und Temperatur und während einer definierten Zeit zu trennen. Die Einzelheiten der Bestimmung werden im späteren angegeben.

Mit Blick auf die Gesamteigenschaften der erfindungsgemäßen vorimprägnierten Garne und insbesondere zur Erzielung von guten Imprägnierungseigenschaften von aus den Garnen hergestellten Faservorformlingen bei der späteren Infusion oder Injektion mit Matrixharz ist es von Vorteil, wenn die Konzentration der zweiten Harzzusammensetzung größer ist als die der ersten Harzzusammensetzung. Ebenso ist es von Vorteil, wenn die Gesamtkonzentration von erster Harzzusammensetzung und zweiter Harzzusammensetzung, bezogen auf das Gesamtgewicht des vorimprägnierten Garns, im Bereich von 1,5 bis 13 Gew.-% liegt.

Für das Infiltrieren der ersten Harzzusammensetzung in das Garn bzw. die Imprägnierung des Garns mit der ersten Harzzusammensetzung ist im Prinzip jede Technik geeignet, welche eine schnelle und vollständige Benetzung der Verstärkungsfaserfilamente des Garns mit der ersten Harzzusammensetzung unterstützt. Derartige Verfahren sind beispielsweise in EP 1 281 498 A beschrieben. Beispielsweise kann man das Garn mit einer Dispersion oder einer Emulsion der ersten Harzzusammensetzung besprühen. Auch kann man einen Film der Harz-Dispersion bzw. -Emulsion auf eine glatte Walze oder in die Rillen einer Walze auftragen und das Garn über die glatte Walze bzw. durch die Rillen der Walze ziehen. Bevorzugt wird das Garn durch ein Bad geführt, welches eine Dispersion oder Emulsion der ersten Harzzusammensetzung enthält. Ebenso ist es möglich, das Garn nacheinander mit den einzelnen Komponenten der ersten Harzzusammensetzung zu imprägnieren, beispielsweise, indem das Garn nacheinander durch verschiedene Dispersionsbäder zu führen, die die einzelnen Komponenten der ersten Harzzusammensetzung enthalten. Dabei wird das dem Imprägnierschritt vorgelegte Garn zunächst mittels geeigneter Spreizorgane auf die gewünschte Breite gespreizt, so dass die einzelnen Fasern bzw. einzelnen Filamente für eine Imprägnierung gut zugänglich sind. Vorzugsweise wird das Bündel des zu imprägnierende Garns bereits in die Form eines flachen Bandes mit dem letztlich für das fertige erfindungsgemäße vorimprägnierte Garn angestrebten Verhältnis von Garnbreite zu Garndicke gebracht.

Für die vorstehend genannte Harz-Dispersion bzw. -Emulsion ist als Flüssigphase im Prinzip jedes Flüssigkeitsgemisch geeignet, welches mit den erfindungsgemäß eingesetzten Harzen eine stabile Dispersion bzw. Emulsion bildet. Unter diesen Flüssigkeitsgemischen sind aus Emissionsschutzgründen insbesondere solche geeignet, welche wässrig sind und einen geringen VOC (Volatile Organic Content) aufweisen. Die Komponenten der ersten Harzzusammensetzung liegen dabei vorteilhafterweise als Partikel im Mikrometerbereich, besonders bevorzugt in einer Größe von weniger als 0,1 µm vor.

Selbstverständlich kann über die Geschwindigkeit, mit der das Garn z.B. durch ein Bad geführt wird, das die Dispersion der ersten Harzzusammensetzung enthält, über die Eintauchlänge und über die Harzkonzentration im Bad die Auftragsmenge der ersten Harzzusammensetzung, bezogen auf das Gesamtgewicht des Garns, eingestellt werden. Dabei liegt die Geschwindigkeit, mit der das Garn durch das Bad geführt wird, bevorzugt im Bereich von 120 bis 750 m/h und besonders bevorzugt im Bereich von 150 bis 550 m/h. Besonders gute Ergebnisse werden bei Geschwindigkeiten im Bereich von 150 bis 350 m/h erzielt. Die Eintauchlänge liegt vorzugsweise im Bereich von 0,2 bis 1 m. Die Konzentration der Komponenten der ersten Harzzusammensetzung in der Dispersion, bezogen auf deren Gewicht, liegt vorzugsweise im Bereich von 2 bis 35 Gew.-%, besonders bevorzugt im Bereich von 2 bis 7 Gew.-%. Dabei kann die erste Harzzusammensetzung auch in mehreren Teilschritten in das Ausgangsgarn eingebracht werden, indem dieses z.B. zunächst durch ein erstes Bad mit einer Dispersion der Harzkomponenten H1 und H2 und anschließend durch ein zweites Bad mit einer Dispersion des Polyhydroxyethers P1 sowie ggf. der Harzkomponenten H4 und H5 geführt wird.

Im Anschluss an die Imprägnierung des Garns mit der ersten Harzzusammensetzung wird das Garn bzw. das Garnbündel an seiner Außenseite mit der zweiten Harzzusammensetzung beaufschlagt. Hierfür wird nach der Imprägnierung die zweite Harzzusammensetzung in Form eines Pulvers auf die Außenseite des vorzugsweise noch feuchten Garnbündels aufgetragen. Die Auftragung der zweiten Harzzusammensetzung kann z.B. über Pulverstreuverfahren, über eine wässrige Dispersion oder über Wirbelschichtverfahren erfolgen, wie sie z.B. in der US-A-5 275 883 oder der US-A-5-094-883 beschrieben werden, wobei die Partikel bevorzugt auch elektrostatisch aufgeladen werden können, wie auch im Falle des elektrostatischen Pulversprühens.

Die partikelförmig vorliegende zweite Harzzusammensetzung weist eine Partikelgrößenverteilung auf, wobei in einer bevorzugten Ausführungsform die über Laserdiffraktometrie bestimmte Partikelgrößenverteilung einen die Partikelgröße kennzeichnenden D50-Wert für die mittlere Partikelgröße im Bereich von ca. 20 bis 120 µm und einen D90-Wert im Bereich von 70 bis 160 µm hat. Besonders bevorzugt ist eine Partikelgrößenverteilung mit einem D50-Wert im Bereich von 30 bis 100 µm und einem D90-Wert im Bereich von 85 bis 155 µm.

Zum Trocknen des mit der ersten und der zweiten Harzzusammensetzung versehenen Garns hat sich eine Trocknungstemperatur im Bereich von 100 bis 160 °C als besonders geeignet erwiesen. Dabei wird gleichzeitig die zweite Harzzusammensetzung angeschmolzen und es kommt zur Ausbildung von inselförmig an der Bündelaußenseite anhaftenden Partikeln oder Tropfen.

Die Herstellung des erfindungsgemäßen vorimprägnierten Garns kann in den Herstellungsprozess des Ausgangsgarns integriert werden, d.h. die Imprägnierung des Garns mit der ersten Harzzusammensetzung und das Aufbringen der zweiten Harzzusammensetzung auf das Garn kann sich direkt an den Herstellungsprozess das vorgelegten Garns anschließen. Es kann jedoch auch ein Ausgangsgarn, welches z.B. auf einer Spule aufgewickelt vorliegt, in einem separaten Prozess mit der ersten und anschließend mit der zweiten Harzzusammensetzung versehen werden. Ebenso ist es möglich, dass ein Ausgangsgarn, welches mit der ersten Harzzusammensetzung imprägniert ist, auf einer Spule aufgewickelt vorliegt und dann in einem separaten Prozessschritt mit der zweiten Harzzusammensetzung versehen wird. Bei diesen Prozessen kann, wie ausgeführt wurde, die Imprägnierung bzw. Infiltrierung des Garns mit der ersten Harzzusammensetzung in zwei oder auch in mehreren Teilschritten erfolgen.

Das erfindungsgemäße vorimprägnierte Garn lässt sich vorteilhafterweise zur Herstellung von textilen Strukturen wie beispielsweise von Faservorformlingen verwenden.

Eine weitere der vorliegenden Erfindung zugrunde liegende Aufgabe wird daher durch eine textile Struktur gelöst, welche die zuvor beschriebenen erfindungsgemäßen Garne umfasst, wobei die Garne vorzugsweise an Stellen gegenseitiger Berührung über die zweite Harzzusammensetzung miteinander verbunden sind. In einer bevorzugten Ausführungsform handelt es sich bei der textilen Struktur um einen Faservorformling.

Obwohl aus den erfindungsgemäßen Garnen auch Gewebe hergestellt werden können, welche nach Aufschmelzen und Wiederverfestigen der Harzzusammensetzungen z.B. einen in besonders hohem Maße schiebefesten Faservorformling ergeben, ist es vorteilhaft, einen solchen Faservorformling direkt aus den erfindungsgemäßen Garnen aufzubauen, weil dabei die Garne in der Richtung positioniert werden können, in der beim Einsatz eines mit dem erfindungsgemäßen Faservorformling hergestellten Verbundbauteils die höchsten mechanischen Belastungen zu erwarten sind.

So sind in einer bevorzugten Ausführungsform des erfindungsgemäßen Faservorformlings die Garne unidirektional angeordnet, wodurch der Vorformling zu einem Verbundbauteil weiterverarbeitet werden kann, bei dessen Einsatz die maximale mechanische Belastung in eben dieser einen Richtung der Garne zu erwarten ist.

In einer weiteren bevorzugten Ausführungsform des erfindungsgemäßen Faservorformlings sind die Garne bi-, tri- oder multidirektional angeordnet, wodurch der Faservorformling zu einem Verbundbauteil weiterverarbeitet werden kann, bei dessen Einsatz die maximale mechanische Belastung in eben diesen beiden oder mehreren Richtungen der Garne zu erwarten ist.

Zusätzlich zu den vorstehend genannten flächigen Ausführungsformen des erfindungsgemäßen Faservorformlings können die uni-, bi-, tri- oder multidirektional angeordneten Garne um einen Körper gewickelt werden, der z.B. Zylinderform hat, so dass ein dreidimensionaler Faservorformling resultiert.

Ferner ist eine Ausführungsform des erfindungsgemäßen Faservorformlings bevorzugt, in welcher die erfindungsgemäßen Garne in kurze Stücke zerkleinert wurden (Kurzschnitt) und die Stücke in alle Raumrichtungen orientiert sein können. Damit eignet sich dieser Faservorformling insbesondere zur Herstellung eines Verbundbauteils, bei dessen Einsatz mechanische Belastungen in allen Raumrichtungen auftreten können.

Eine weitere der vorliegenden Erfindung zugrunde liegende Aufgabe wird gelöst durch ein Verfahren zur Herstellung eines Faservorformlings umfassend die Schritte
a) Vorlegen mindestens eines der erfindungsgemäßen Garne,
b) Anordnen des mindestens einen Garns in einer Konfiguration, welche der Konfiguration des gewünschten Faservorformlings entspricht,
c) Erwärmen der in Schritt b) resultierenden Konfiguration bei einer Temperatur oberhalb des Schmelzpunktes der zweiten Harzzusammensetzung und
d) Abkühlen der in Schritt c) resultierenden Konfiguration zumindest unter den Schmelzpunkt der zweiten Harzzusammensetzung.

In einer bevorzugten Ausführungsform des erfindungsgemäßen Verfahrens wird in Schritt c) die in Schritt b) resultierende Konfiguration gleichzeitig mit dem Erwärmen verpresst.

Der erfindungsgemäße Faservorformling, bzw. der nach dem erfindungsgemäßen Verfahren hergestellte Faservorformling zeigt eine hohe Schiebefestigkeit, weil die Garne des erfindungsgemäßen Faservorformlings zumindest über die zweite Harzzusammensetzung miteinander verbunden sind. Daher lässt sich der erfindungsgemäße Faservorformling gut handhaben, was insbesondere bei seiner Weiterverarbeitung zu einem Verbundbauteil vorteilhaft ist.

Wenn der erfindungsgemäße Faservorformling, bzw. der nach dem erfindungsgemäßen Verfahren hergestellte Faservorformling Durchbrüche aufweisen soll, können diese durch entsprechendes Anordnen der Garne und somit ohne jeglichen Schnittverlust realisiert werden. Somit entfällt ein kosten- und arbeitsaufwendiges Zuschneiden und es entsteht keinerlei Abfall. Dadurch wird die Herstellung von Verbundbauteilen mit Durchbrüchen erleichtert und verbilligt.

Ferner kann bei der Herstellung des erfindungsgemäßen Faservorformlings, bzw. des nach dem erfindungsgemäßen Verfahren hergestellten Faservorformlings durch den Einsatz eines der erfindungsgemäßen Garne anstatt eines textilen Flächengebildes das Garn in den Richtungen positioniert werden, in denen beim Einsatz des nachfolgend hergestellten Verbundbauteils die höchsten mechanischen Belastungen zu erwarten sind.

Beispielsweise werden in einer bevorzugten Ausführungsform des erfindungsgemäßen Verfahrens zur Herstellung eines Faservorformlings in Schritt b) erfindungsgemäße Garne unidirektional angeordnet, so dass nach Schritt d) ein erfindungsgemäßer Faservorformling resultiert, in dem die Garne unidirektional angeordnet sind.

In einer weiteren bevorzugten Ausführungsform des erfindungsgemäßen Verfahrens zur Herstellung des erfindungsgemäßen Vorformlings kann man in Schritt b) die erfindungsgemäßen Garne entweder in bi-, tri- oder multidirektionalen Lagen in eine Konfiguration legen, welche der Konfiguration des gewünschten Faservorformlings entspricht. Dabei können ausschließlich erfindungsgemäße Garne verwendet werden. Ebenso kann innerhalb einer Lage von Garnen nur ein Teil aus erfindungsgemäßen Garnen bestehen und der Rest aus Garnen, deren Filamente keinerlei Harzbeschichtung oder übliche, zur Verbesserung der Verarbeitbarkeit von Kohlenstofffasern eingesetzte Garnpräparationen aufweisen. Die in der genannten Weise konfigurierten Garne werden in Schritt c) des erfindungsgemäßen Verfahrens bei einer Temperatur oberhalb des Schmelzpunkts der zweiten Harzzusammensetzung erwärmt, wobei die Garne gegebenenfalls verpresst werden. Dadurch werden die Garne klebrig. Nach Abkühlung zumindest unter den Schmelzpunkt der zweiten Harzzusammensetzung in Schritt d) entsteht ein erfindungsgemäßer Faservorformling, in dem die Garne bi-, tri- oder multidirektional angeordnet sind.

In einer weiteren Ausführungsform des Verfahrens zur Herstellung des erfindungsgemäßen Faservorformlings schneidet man die erfindungsgemäßen Garne in kurze Stücke, die z.B. eine Länge von 1 bis 1000 mm, bevorzugt von 1 bis 40 mm, haben, und platziert in Schritt a) die kurzen Garnstücke in eine Form. Danach werden in Schritt b) des erfindungsgemäßen Verfahrens die kurzen Garnstücke bei einer Temperatur oberhalb des Schmelzpunktes der zweiten Harzzusammensetzung erwärmt, wodurch die Kurzgarnstücke klebrig werden, und dabei gegebenenfalls verpresst. Nach Abkühlung zumindest unter den Schmelzpunkt der zweiten Harzzusammensetzung in Schritt d) entsteht ein erfindungsgemäßer Faservorformling, worin die erfindungsgemäßen Garne als Kurzgarne mit isotroper Ausrichtung vorliegen.

Der erfindungsgemäße Faservorformling, bzw. der nach dem erfindungsgemäßen Verfahren hergestellte Faservorformling, bzw. der aus der erfindungsgemäßen Verwendung resultierende Faservorformling lässt sich aus den bereits genannten Gründen vorteilhaft zur Herstellung eines Verbundbauteils verwenden, der eine Matrix umfasst, die ausgewählt ist aus einer der Gruppen der Polymere, Metalle, Keramiken, hydraulisch abbindenden Werkstoffe und Kohlenstoff, wobei als Polymermatrix Thermoplaste wie z.B. Polyamide, Co-Polyamide, Polyurethane und ähnliche oder Duromere wie z.B. Epoxide, als Metallmatrix z.B. Stahl(legierungen) oder Titan, als Keramikmatrix z.B. Siliziumcarbid und Bornitrid, als hydraulisch abbindende Werkstoffe Mörtel oder Beton und als Kohlenstoffmatrix z.B. Graphit geeignet sind.

In den aus den erfindungsgemäßen Verwendungen resultierenden Verbundbauteilen sind die erfindungsgemäßen Garne in der Richtung angeordnet, in der beim Einsatz der Verbundbauteile die größten mechanischen Belastungen zu erwarten sind. Somit führt die erfindungsgemäße Verwendung der erfindungsgemäßen Garne und des daraus hergestellten Faservorformlings zu Verbundbauteilen, in denen die Ausrichtung der Garne an die zu erwartenden mechanischen Belastungen maßgeschneidert angepasst ist.

Die Erfindung wird anhand der folgenden Beispiele und Vergleichsbeispiele näher erläutert. Dabei werden die folgenden Analysemethoden eingesetzt:
Der Epoxidwert der eingesetzten Epoxidharze wird gemäß der DIN EN ISO 3001:1999 bestimmt.

Das Molekulargewicht wird mittels GPC-Analyse nach DIN 55672 nach Kalibration mit Polystyrol (Eluent Tetrahydrofuran) ermittelt.

Die Säurezahl in mg KOH/g wird durch Titration mit Kaliumhydroxid nach DIN 53240-2 bestimmt.

Die Partikelgrößenverteilung wird mittels Laserdiffraktometrie nach ISO 13320 ermittelt. Aus der Partikelgrößenverteilung werden anschließend die Kenngrößen D50 und D90 für die Partikelgrößen bestimmt.

Die Schmelztemperatur wird mittel DSC nach DIN 65467 bestimmt.

Die Kleb- oder Adhäsionskraft der zweiten Harzzusammensetzung wird bei einer Temperatur von 20°C oberhalb der Schmelztemperatur in Anlehnung an die ASTM D2979 ermittelt. Die Kleb- oder Adhäsionskraft wird als Kraft gemessen, die benötigt wird, um eine Probe der zweiten Harzzusammensetzung von einer Klebefläche kurz nach In-Kontakt-Bringen von zweiter Harzzusammensetzung und Klebefläche unter einer definierten Belastung und Temperatur und während einer definierten Zeit zu trennen. Hierzu wird eine für Zugprüfungen geeignete und mit entsprechenden Kraftaufnehmern ausgerüstete Messapparatur wie z.B. das Rheometer MCR 301 (Fa. Anton Paar GmbH) eingesetzt. Die Bestimmung der Klebkraft bzw. der Adhäsionskraft erfolgt dabei mit einer Platte-Platte Messgeometrie mit Platten aus Aluminium (AlCuMgPb, Wst.-Nr. 3.1645, EN AW 2007) und einem Durchmesser der Platten von 25 mm.

Es werden ca. 5 g der zu prüfenden Harzzusammensetzung (vorzugsweise pulverförmig) bei Raumtemperatur auf die untere Platte des Platte-Platte-Messsystems aufgebracht. Die Platten des Messsystems werden dann bis kurz vor Berühren des Probenmaterials durch die obere Platte auf einen Abstand von ca. 2,025 mm zusammengefahren. Anschließend wird die Probe mittels einer geeigneten Temperiervorrichtung (z.B. Peltier-Temperiersystem) auf die erforderliche Messtemperatur von 20°C oberhalb der Schmelztemperatur der zu untersuchenden zweiten Harzzusammensetzung erwärmt. Nach Erreichen der Messtemperatur werden die Platten des Messsystems bis zum Berühren des Probenmaterials auf 2 mm zusammengefahren und das Probenmaterial mit einer konstanten Kraft von 10 N für 5 s angepresst.

Anschließend wird die obere Platte mit einer konstanten Abzugsgeschwindigkeit von 2 mm/s und konstanter Temperatur nach oben gefahren und die dabei benötigte Kraft kontinuierlich aufgezeichnet. Der Maximalwert der für das Auseinanderziehen der Platten benötigten Kraft wird als Maß für die Kleb- bzw. Adhäsionskraft der untersuchten Probe genommen.

Die Konzentration der Harzzusammensetzung, bezogen auf das Gesamtgewicht aus Garn und Harzzusammensetzung wird über Extraktion mittels Schwefelsäure/Wasserstoffperoxid gemäß EN ISO 10548, Verfahren B, bestimmt.

### Beispiel 1:

Ein Kohlenstofffaserfilamentgarn mit einem Garntiter von 1600 tex und 24000 Filamenten wurde trocken mit einer Geschwindigkeit von ca. 480 m/h unter einer Fadenspannung von 2000 cN durch ein Bad mit einer ersten wässrigen Dispersion, enthaltend Komponenten einer ersten Harzzusammensetzung, geführt. Das Bad war auf eine Temperatur von 20°C temperiert. Die erste wässrige Dispersion enthielt als Komponenten der ersten Harzzusammensetzung in einer Gesamtkonzentration von 15 Gew.-% ein Urethanharz H1 auf Basis eines Bisphenol A Epichlorhydrinharzes mit zwei Wiederholungseinheiten, eines Toluylendiisocyanats und eines Polyethylenoxids mit zehn Wiederholungseinheiten sowie ein oxyalykyliertes Bisphenol A Harz H2, basierend auf Bisphenol A mit zehn Wiederholungseinheiten Ethylenoxid und einen Ester H3 der Palmitinsäure und des Isopropylalkohols. Das Gewichtsverhältnis (H1: H2) der Harze H1 und H2 zueinander betrug 8, Das Gewichtsverhältnis (H1+H2):H3 betrug 9. Die Mischung der Komponenten H1 bis H3 in der ersten wässrigen Dispersion hatte eine Gesamtkonzentration von 15 Gew.-%. Die Mischung der Harze H1 und H2 hatte einen Epoxidwert von 640 mmol/kg und war bei Raumtemperatur hochviskos mit einer Viskosität von 990 Pa s.

Nach Durchlaufen des die erste wässrige Dispersion der ersten Harzzusammensetzung enthaltenden ersten Bades wurde das mit den zuvor genannten Komponenten der ersten Harzzusammensetzung infiltrierte Garn bei einer Temperatur von 200°C getrocknet. Nach der Trocknung wies das Kohlenstofffaserfilamentgarn die Komponenten H1, H2 und H3 in einer Gesamtkonzentration von ca. 1,0 Gew.-%, bezogen auf das Gewicht des so imprägnierten Garns, auf.

Das so vorbehandelte Kohlenstofffaserfilamentgarn wurde anschließend trocken mit einer Geschwindigkeit von ca. 100 m/h unter einer Fadenspannung von 2500 cN ein zweites Bad geführt, das eine zweite wässrige Dispersion bestehend aus weiteren Komponenten der ersten Harzzusammensetzung enthielt. Das zweite Bad war auf eine Temperatur von 20°C temperiert. Die zweite wässrige Dispersion enthielt als weitere Komponenten der ersten Harzzusammensetzung ein Epoxidharz H4 und ein Epoxidharz H5 in einer Gesamtkonzentration von 0,2 Gew.-%, wobei das Gewichtsverhältnis H4:H5 der Harze H4 und H5 1,2 betrug. Das Epoxidharz H4 hatte einen Epoxidwert von ca. 2000 mmol/kg und ein mittleres Molekulargewicht M_{N} von 900 g/Mol und war bei Raumtemperatur fest. Das Epoxidharz H5 hatte einen Epoxidwert von ca. 5400 mmol/kg und ein mittleres Molekulargewicht M_{N} von <700 g/Mol und war bei Raumtemperatur flüssig. Die zweite wässrige Dispersion enthielt des Weiteren in einer Konzentration von 2,3 Gew.-% einen linearen aromatischen Polyhydroxyether P1 mit einer Säurezahl von 50 mg KOH/g und einem mittleren Molekulargewicht M_{N} von 4600 g/Mol, der bei Raumtemperatur fest war.

Nach Durchlaufen des zweiten Imprägnierbades wurde das mit der aus den Komponenten H1 bis H5 und P1 bestehenden ersten Harzzusammensetzung in einer Gesamtkonzentration im Bereich von 1,7 Gew.-% beaufschlagte Garn feucht durch eine übliche Pulverbeschichtungskammer geführt, in der die zweite Harzzusammensetzung über Pulverbeschichtung auf das mit der ersten Harzzusammensetzung infiltrierte Garn aufgetragen wurde. Die zweite Harzzusammensetzung bestand aus einem Epoxidharz H6, welches einen Epoxidwert von 500 bis 645 mmol/kg und ein mittleres Molekulargewicht M_{N} von 2900 g/Mol aufwies und bei Raumtemperatur fest war. Der Betrag der Kleb- oder Adhäsionskraft der zweiten Harzzusammensetzung wurde zu 10 N bestimmt. Das Epoxidharz H6 lag in Form eines Pulvers mit einer mittleren Partikelgröße D50 von 70 µm und einem D90 von 125 µm vor. Die Konzentration an zweiter Harzzusammensetzung auf der Garnoberfläche wurde über übliche Maßnahmen wie über den Volumenstrom der Partikel der zweiten Harzzusammensetzung und/oder den Abluftstrom eingestellt.

Nach Austritt aus der Pulverbeschichtungskammer wurde das mit der ersten und der zweiten Harzzusammensetzung versehene Kohlenstofffaserfilamentgarn bei einer Temperatur von 120°C getrocknet. Nach der Trocknung wies das erhaltene vorimprägnierte Garn eine Konzentration an H1-H5 und P1 (erste Harzzusammensetzung) von 1,7 Gew.-% und an H6 (zweite Harzzusammensetzung) von 5,1 Gew.-% auf, jeweils bezogen auf das Gesamtgewicht des vorimprägnierten Garns.

Das fertige vorimprägnierte Garn zeigte an seiner Außenseite insel- bzw. tropfenförmige Anhaftungen der zweiten Harzzusammensetzung, während das Garninnere frei von der zweiten Harzzusammensetzung war. Das vorimprägnierte Garn wies eine stabile Form mit einem Verhältnis von Garnbreite zu Garndicke von 15,9 auf. In seinem Inneren zeigte das mit erster und zweiter Harzzusammensetzung versehene Garn einen guten Garnschluss, d.h. die Filamente des Kohlenstofffaserfilamentgarns waren dort zumindest teilweise über die erste Harzzusammensetzung miteinander verbunden. Die Haftfestigkeit des imprägnierten Garns war gut.

### Beispiel 2:

Es wurde unter Verwendung der ersten wässrigen Dispersion aus Beispiel 1 ebenfalls ein trocken vorgelegtes Kohlenstofffaserfilamentgarn mit einem Garntiter von 1600 tex und 24000 Filamenten mit einer Geschwindigkeit von ca. 100 m/h und unter einer Fadenspannung von 2500 cN durch ein erstes Bad mit der ersten wässrigen Dispersion geführt und mit den Komponenten H1, H2 und H3 der ersten Harzzusammensetzung imprägniert.

Anschließend wurde das mit den zuvor genannten Komponenten der ersten Harzzusammensetzung infiltrierte Garn bei einer Temperatur von 150°C getrocknet. Nach der Trocknung wies das Kohlenstofffaserfilamentgarn die Komponenten H1, H2 und H3 in einer Gesamtkonzentration von ca. 0,9 Gew.-%, bezogen auf das Gewicht des so imprägnierten Garns, auf.

Das so vorbehandelte Kohlenstofffaserfilamentgarn wurde anschließend trocken mit einer Geschwindigkeit von ca. 100 m/h und unter einer Fadenspannung von 1800 cN in ein zweites Bad geführt, das eine zweite wässrige Dispersion mit weiteren Komponenten einer ersten Harzzusammensetzung enthielt. Das Bad war auf eine Temperatur von 20°C temperiert. Die zweite wässrige Dispersion enthielt als weitere Komponente der ersten Harzzusammensetzung in einer Konzentration von 2 Gew.-% einen linearen aromatischen Polyhydroxyether P1 mit einer Säurezahl von 50 mg KOH/g und einem mittleren Molekulargewicht M_{N} von 4600 g/Mol, der bei Raumtemperatur fest war.

Nach Durchlaufen des zweiten Imprägnierbades wurde das mit der aus den Komponenten H1 bis H3 und P1 bestehenden ersten Harzzusammensetzung in einer Gesamtkonzentration im Bereich von 1,7 Gew.-% beaufschlagte Garn wie in Beispiel 1 feucht durch eine übliche Pulverbeschichtungskammer geführt, in der die zweite Harzzusammensetzung über Pulverbeschichtung auf das mit der ersten Harzzusammensetzung infiltrierte Garn aufgetragen wurde. Als zweite Harzzusammensetzung wurde das in Beispiel 1 verwendete Epoxidharz H6 eingesetzt.

Nach Austritt aus der Pulverbeschichtungskammer wurde das mit der ersten und der zweiten Harzzusammensetzung versehene Kohlenstofffaserfilamentgarn bei einer Temperatur von 120°C getrocknet. Nach der Trocknung wies das erhaltene vorimprägnierte Garn eine Konzentration an H1-H3 und P1 (erste Harzzusammensetzung) von 1,7 Gew.-% und an H6 (zweite Harzzusammensetzung) von 4,5 Gew.-% auf, jeweils bezogen auf das Gesamtgewicht des vorimprägnierten Garns.

Das fertige vorimprägnierte Garn zeigte an seiner Außenseite insel- bzw. tropfenförmige Anhaftungen der zweiten Harzzusammensetzung, während das Garninnere frei von der zweiten Harzzusammensetzung war. Das vorimprägnierte Garn wies eine stabile Form mit einem Verhältnis von Garnbreite zu Garndicke von 23,4 auf. In seinem Inneren zeigte das mit erster und zweiter Harzzusammensetzung versehene Garn einen guten Garnschluss, d.h. die Filamente des Kohlenstofffaserfilamentgarns waren dort zumindest teilweise über die erste Harzzusammensetzung miteinander verbunden. Die Haftfestigkeit des imprägnierten Garns war gut.

### Vergleichsbeispiel 1:

Ein Kohlenstofffaserfilamentgarn mit einem Garntiter von 1600 tex und 24000 Filamenten wurde trocken mit einer Geschwindigkeit von ca. 240 m/h unter einer Fadenspannung von 340 cN durch ein Bad mit der in Beispiel 1 verwendeten ersten Dispersion der Komponenten H1, H2 und H3 der ersten Harzzusammensetzung geführt.

Nach Durchlaufen des Bades (Verweilzeit = 12 s) wurde das mit den Komponenten H1, H2 und H3 infiltrierte Garn bei von 250°C auf 140°C abfallenden Temperaturen getrocknet. Nach der Trocknung wies das Kohlenstofffaserfilamentgarn die aus den Komponenten H1, H2 und H3 bestehende Teile der ersten Harzzusammensetzung in einer Konzentration von 0,9 Gew.-% auf. Die Mischung der Harze H1 und H2 hatte einen Epoxidwert von 493 mmol/kg.

Das so vorimprägnierte Garn wies eine zu hohe Flexibilität und zu geringe Formstabilität auf, die Voraussetzung für eine gute Verarbeitbarkeit der Garne ist. Die Haftfestigkeit der Garne des Vergleichsbeispiels war unzureichend, eine Verklebung von Stücken des vorimprägnierten Garns des Vergleichsbeispiels miteinander war nicht möglich.

### Beispiel 3:

Das gemäß Beispiel 1 erhaltene, mit erster und zweiter Harzzusammensetzung vorimprägnierte Kohlenstofffaserfilamentgarn wurde auf eine Metallplatte, deren beide Grundflächen mit je einer Trennfolie belegt waren, mittels einer Laborwickelanlage mit einer Fadengeschwindigkeit von 23,1 mm/s und unter einer Fadenzugkraft von 400 cN jeweils bis zum Rand der Metallplatte gewickelt. Die Grundflächen der Metallplatte hatten eine Abmessung von 280 x 300 mm² und werden jeweils mittig zwischen den gegenüberliegenden Seitenkanten jeweils eine erste bzw. eine zweite Wickelachse auf.

Zunächst wurde auf beiden Seiten der Metallplatte eine erste Wickellage mit einem Faserflächengewicht von 267 g/m² mit einer 90° Orientierung zur ersten Wickelachse erzeugt. Danach wurde die Metallplatte so um 90°gedreht, dass die bereits vorhandene Wickellage parallel zur zweiten Wickelachse orientiert war. Im nächsten Schritt wurde unter identischen Wickelbedingungen auf die bereits vorhandene Wickellage eine weitere Wickellage mit einer 90°-Orientierung zur ersten Wickellage aufgebracht. Auf diese Weise resultierte auf beiden Seiten der Metallplatte jeweils ein geschichteter Aufbau mit einer 0°-Fadenlage und einer 90°-Fadenlage. Der vorstehend beschriebene Wickelvorgang wurde wiederholt, bis auf beiden Grundseiten der Metallplatte jeweils vier Wickellagen aufeinander lagen, die abwechselnd eine 0°-und eine 90°-Fadenorientierung aufweisen.

Anschließend wurden die Wickellagen auf beiden Grundseiten der Metallplatte mit je einer Trennfolie belegt. Die Metallplatte wurde danach komplett mit beiden jeweils vierlagigen Wickelaufbauten und den Trennfolien in einer Presse während 5 min bei einem Flächendruck von 2 bar und einer Temperatur von 125°C getempert. Der resultierende Pressling wurde unter den Schmelzpunkt der zweiten Harzzusammensetzung (Epoxidharz H6) abgekühlt. Danach wurden die beiden Wickelpakete an den Stirnflächen der Metallplatte auseinander geschnitten und die vier Trennfolien entfernt. Auf diese Weise resultierten zwei Vorformlinge mit jeweils einem vierlagigen, abwechselnden 0°-und 90°-Aufbau, d. h. mit einer bidirektionalen Anordnung der Garne. Die nominale Dicke pro Fadenlage betrug 0,25 mm.

Die Vorformlinge waren auf Grund der hohen Haftfestigkeit der eingesetzten vorimprägnierten Garne sehr formstabil und ließen sich problemlos zur Weiterverarbeitung handhaben. Darüber hinaus wurde nach Einlegen der Vorformlinge in eine Form beim Injizieren eines Matrixharzes eine gute Imprägnierfähigkeit der Vorformlinge festgestellt.

### Vergleichsbeispiel 2:

Es wurde wie in Beispiel 3 vorgegangen. Als vorimprägnierte Garne wurden jedoch die gemäß Vergleichsbeispiel 1 erhaltenen Garne eingesetzt.

Die Vorformlinge des Vergleichsbeispiels waren wegen der geringeren Haftfestigkeit der eingesetzten vorimprägnierten Garne nicht formstabil. Die Handhabung bei der Weiterverarbeitung erwies sich wegen der Instabilität als problematisch.

### Beispiel 4:

Aus einem analog zu dem in Beispiel 3 hergestellten Vorformling, der jedoch einen 8-lagigen Aufbau mit Fadenlagen allein in 0° Orientierung aufwies, wurde ein quadratisches Stück mit einer Kantenlänge von 200 mm herausgeschnitten, welches in eine Form mit gleicher Kantenlänge und einer Höhe von 2 mm eingelegt wurde. In die Form wurde ein zuvor auf 80°C erwärmtes Epoxidharz (Typ RTM6, Fa. Hexcel) in einer Menge injiziert, dass ein Verbundwerkstoff mit einem Faservolumenanteil von 60 Vol.-% resultierte. Der mit Harz imprägnierte Vorformling wurde bei 180°C ausgehärtet. Es resultierte ein Verbundlaminat mit einem achtlagigen Aufbau mit einer Orientierung der Fäden in 0°- Richtung.

Aus dem Verbundlaminat wurden Probekörper zur Ermittlung der interlaminaren Scherfestigkeit (ILSS) nach DIN EN 2563 und der Druckfestigkeit sowie des Druckmoduls nach DIN EN 2850 entnommen. Es zeigte sich, dass die mechanischen Kennwerte des mit den vorimprägnierten Garnen der vorliegenden Erfindung hergestellten Verbundlaminats auf gleichem Niveau lagen wie entsprechende Kennwerte eines Laminats auf Basis von Standard-Kohlenstofffasergarnen (Tenax STS40 F13 24 K 1600 tex, Fa. Toho Tenax Europe GmbH), wenngleich die Konzentration und die Zusammensetzung des Harzauftrags der erfindungsgemäßen Garne deutlich von der Konzentration und der Zusammensetzung der Standard-Kohlenstofffasergarne abweicht.

## Patentansprüche

1. Vorimprägniertes Garn bestehend aus einem Bündel aus Verstärkungsfaserfilamenten mit einem Bündelinneren und einer Bündelaußenseite,
- wobei die Verstärkungsfaserfilamente mit einer in das vorimprägnierte Garn infiltrierten ersten Harzzusammensetzung imprägniert sind und die Filamente des vorimprägnierten Garns über die erste Harzzusammensetzung zumindest teilweise verbunden sind und
- wobei die erste Harzzusammensetzung mindestens ein Urethanharz, H1, hergestellt aus einer Reaktion einer bifunktionellen aromatischen Epoxidverbindung auf Basis Bisphenol A, einem aromatischen Polyisocyanat und einem Polyalkylenglykol, und ein oxyalkyliertes Bisphenol A Harz, H2, enthält,
- die Harze H1 und H2 in einem Gewichtsverhältnis H1:H2 von 1 bis 15 vorliegen und
- die Mischung der Harze H1 und H2 bei Raumtemperatur eine Viskosität von 10 bis 10.000 Pa s aufweist,
**dadurch gekennzeichnet, dass**
- das vorimprägnierte Garn, bezogen auf sein Gesamtgewicht, 0,1 bis 4 Gew.-% der ersten Harzzusammensetzung aufweist und
- die erste Harzzusammensetzung des Weiteren einen aromatischen Polyhydroxyether P1 enthält, welcher eine Säurezahl von 40 bis 55 mg KOH/g und ein mittleres Molekulargewicht M_{N} von 4000 bis 5000 g/mol aufweist, und dass
- das vorimprägnierte Garn an der Bündelaußenseite eine zweite Harzzusammensetzung in Form von an den Verstärkungsfaserfilamenten anhaftenden Partikeln oder Tropfen aufweist,
- wobei die zweite Harzzusammensetzung bei Raumtemperatur fest ist, eine Schmelztemperatur im Bereich von 80 bis 150 °C aufweist und auf der Bündelaußenseite in einer Konzentration von 0,5 bis 14 Gew.-%, bezogen auf das Gesamtgewicht des vorimprägnierten Garns, vorliegt,
- wobei mindestens 40 % der Fläche der Bündelaußenseite frei von der zweiten Harzzusammensetzung sind und
- wobei das Bündelinnere frei von der zweiten Harzzusammensetzung ist.

2. Vorimprägniertes Garn nach Anspruch 1, **dadurch gekennzeichnet, dass** die erste Harzzusammensetzung das Urethanharz H1 und das oxyalkylierte Bisphenol A Harz H2 zu dem aromatischen Polyhydroxyether P1 in einem Gewichtsverhältnis (H1+H2):P1 von 0,05 bis 20 enthält.

3. Vorimprägniertes Garn nach Anspruch 1 oder 2, **dadurch gekennzeichnet, dass** die erste Harzzusammensetzung des Weiteren einen Ester H3 einer langkettigen gesättigten monofunktionellen Carboxylsäure und eines aliphatischen monofunktionellen Alkanols enthält.

4. Vorimprägniertes Garn nach einem oder mehreren der Ansprüche 1 bis 3, **dadurch gekennzeichnet, dass** die erste Harzzusammensetzung des Weiteren ein Bisphenol A Epichlorhydrin-Harz H4 und ein Bisphenol A Epichlorhydrin-Harz H5 in einem Gewichtsverhältnis H4:H5 von 1,1 bis 1,4 enthält, wobei H4 einen Epoxidwert von 1850 bis 2400 mmol/kg und ein mittleres Molekulargewicht M_{N} von 800 bis 1000 g/Mol aufweist und bei Raumtemperatur fest ist, und H5 einen Epoxidwert von 5000 bis 5600 mmol/kg und ein mittleres Molekulargewicht M_{N} von < 700 g/Mol aufweist und bei Raumtemperatur flüssig ist.

5. Vorimprägniertes Garn nach einem oder mehreren der Ansprüche 1 bis 4, **dadurch gekennzeichnet, dass** die erste Harzzusammensetzung in einer Konzentration von 0,4 bis 3 Gew.-%, bezogen auf das Gesamtgewicht des vorimprägnierten Garns, vorliegt.

6. Vorimprägniertes Garn nach einem oder mehreren der Ansprüche 1 bis 5, **dadurch gekennzeichnet, dass** die zweite Harzzusammensetzung zu mindestens 50 Gew.-% ein Bisphenol A Epichlorhydrin-Harz H6 mit einem Epoxidwert von 480 bis 645 mmol/kg und einem mittleren Molekulargewicht M_{N} von 2700 bis 4000 g/Mol, einen aromatischen Polyhydroxyether P2, ein Polyamid, ein Polyethylen, ein Ethylen-Copolymer oder ein thermoplastisches Polyurethanharz oder Mischungen dieser Verbindungen enthält.

7. Vorimprägniertes Garn nach einem oder mehreren der Ansprüche 1 bis 6, **dadurch gekennzeichnet, dass** die zweite Harzzusammensetzung bei einer Temperatur von 20°C oberhalb der Schmelztemperatur eine Adhäsionsfestigkeit von mindestens 5 N aufweist, bezogen auf eine Klebefläche mit einem Durchmesser von 25 mm.

8. Vorimprägniertes Garn nach einem oder mehreren der Ansprüche 1 bis 7, **dadurch gekennzeichnet, dass** die an den Verstärkungsfaserfilamenten anhaftenden Partikel oder Tropfen der zweiten Harzzusammensetzung eine Größe von weniger als 300 µm aufweisen.

9. Vorimprägniertes Garn nach einem oder mehreren der Ansprüche 1 bis 8, **dadurch gekennzeichnet, dass** die Konzentration der zweiten Harzzusammensetzung größer ist als die der ersten Harzzusammensetzung.

10. Vorimprägniertes Garn nach einem oder mehreren der Ansprüche 1 bis 9, **dadurch gekennzeichnet, dass** die Gesamtkonzentration von erster Harzzusammensetzung und zweiter Harzzusammensetzung, bezogen auf das Gesamtgewicht des vorimprägnierten Garns, im Bereich von 1,5 bis 13 Gew.-% liegt.

11. Vorimprägniertes Garn nach einem oder mehreren der Ansprüche 1 bis 10, **dadurch gekennzeichnet, dass** die erste Harzzusammensetzung und/oder die zweite Harzzusammensetzung frei von Härtern sind.

12. Vorimprägniertes Garn nach einem oder mehreren der Ansprüche 1 bis 11, **dadurch gekennzeichnet, dass** es sich bei dem Garn um ein Kohlenstofffasergarn, das aus Pech-, Polyacrylnitril-, Lignin- oder Viskosevorprodukten gewonnen wurde, oder um ein Aramid-, Glas-, Keramik-, oder Borfasergarn, ein Synthesefasergarn oder ein Naturfasergarn oder um eine Kombination aus einem oder mehreren dieser Fasern handelt.

13. Vorimprägniertes Garn nach einem oder mehreren der Ansprüche 1 bis 12, **dadurch gekennzeichnet, dass** es als flaches Band vorliegt, das ein Verhältnis von Garnbreite zu Garndicke von mindestens 10 aufweist.

14. Textile Struktur, umfassend vorimprägnierte Garne nach einem oder mehreren der Ansprüche 1 bis 13.

15. Textile Struktur nach Anspruch 14, **dadurch gekennzeichnet, dass** die vorimprägnierten Garne an Stellen gegenseitiger Berührung zumindest über die zweite Harzzusammensetzung miteinander verbunden sind.

## Claims

1. Pre-impregnated yarn, comprising a bundle of reinforcing-fiber filaments, having a bundle inside and a bundle outside,
- wherein the reinforcing-fiber filaments are impregnated with a first resin composition which infiltrates into the pre-impregnated yarn, and the filaments of the pre-impregnated yarn are at least partially connected using the first resin composition and
- wherein the first resin composition comprises at least one urethane resin, H1, produced from a reaction of a bifunctional aromatic epoxide compound based on bisphenol A, an aromatic polyisocyanate and a polyalkylene glycol, and an oxyalkylated bisphenol A resin, H2,
- resins H1 and H2 exist at a weight ratio H1:H2 of 1 to 15 and
- the mixture of resins H1 and H2 has a viscosity of 10 to 10,000 Pa s at room temperature,
**characterized in that**
- the pre-impregnated yarn comprises 0.1 to 4 wt % of the first resin composition based on overall weight and
- the first resin composition also comprises an aromatic polyhydroxy ether P1 having an acid number of 40 to 55 mm KOH/g and an average molecular weight M_{N} of 4000 to 5000 g/mol, and that
- the pre-impregnated yarn comprises a second resin composition on the bundle outside in the form of particles or droplets which adhere to the reinforcing-fiber filaments,
- wherein the second resin composition is solid at room temperature, has a melting temperature in the range of 80 to 150°C and exists on the bundle outside at a concentration of 0.5 to 14 wt % based on the total weight of the pre-impregnated yarn,
- wherein at least 40% of the surface area of the bundle outside is free of the second resin composition and
- wherein the bundle inside is free of the second resin composition.

2. Pre -impregnated yarn according to claim 1, **characterized in that** the first resin composition comprises the urethane resin H1 and the oxyalkylated bisphenol A resin H2 at a weight ratio relative to the aromatic polyhydroxy ether P1 of (H1+H2):P1 of 0.05 to 20.

3. Pre -impregnated yarn according to claim 1 or 2, **characterized in that** the first resin composition further comprises an ester H3 of a long-chained, saturated monofunctional carboxylic acid and an aliphatic monofunctional alkanol.

4. Pre -impregnated yarn according to one or more of claims 1 to 3, **characterized in that** the first resin composition further comprises a bisphenol A epichlorohydrin resin H4 and a bisphenol A epichlorohydrin resin H5 at a weight ratio H4:H5 of 1.1 to 1.4, wherein H4 has an epoxide value of 1850 to 2400 mmol/kg and an average molecular weight M_{N} of 800 to 1000 g/mol and is solid at room temperature, and H5 has an epoxide value of 5000 to 5600 mmol/kg and an average molecular weight M_{N} of <700 g/mol and is liquid at room temperature.

5. Pre -impregnated yarn according to one or more of claims 1 to 4, **characterized in that** the first resin composition exists at a concentration of 0.4 to 3 wt % relative to the total weight of the pre-impregnated yarn.

6. Pre -impregnated yarn according to one or more of claims 1 to 5, **characterized in that** the second resin composition comprises at least 50 wt % of a bisphenol A epichlorohydrin resin H6 with an epoxide value of 480 to 645 mmol/kg and an average molecular weight M_{N} of 2700 to 4000 g/Mol, an aromatic polyhydroxy ether P2, a polyamide, a polyethylene, an ethylene copolymer or a thermoplastic polyurethane resin or mixtures of said compounds.

7. Pre -impregnated yarn according to one or more of claims 1 to 6, **characterized in that** the second resin composition has an adhesion strength of at least 5 N at a temperature of 20°C above the melting temperature, based on an adhesion surface area with a diameter of 25 mm.

8. Pre -impregnated yarn according to one or more of claims 1 to 7, **characterized in that** the particles or droplets of the second resin composition which adhere to the reinforcing-fiber filaments have a size of less than 300 µm.

9. Pre -impregnated yarn according to one or more of claims 1 to 8, **characterized in that** the concentration of the second resin composition is greater than that of the first resin composition.

10. Pre -impregnated yarn according to one or more of claims 1 to 9, **characterized in that** the total concentration of the first resin composition and the second resin composition, relative to the total weight of the pre-impregnated yarn, is within the range of 1.5 to 13 wt %.

11. Pre -impregnated yarn according to one or more of claims 1 to 10, **characterized in that** the first resin composition and/or the second resin composition is free of curing agents.

12. Pre -impregnated yarn according to one or more of claims 1 to 11, **characterized in that** the yarn is a carbon-fiber yarn acquired from pitch, polyacrylonitrile, lignin or rayon precursors, or is an aramid, glass, ceramic or boron fiber yarn, a synthetic fiber yarn or a natural fiber yarn, or a combination of one or more of said fibers.

13. Pre -impregnated yarn according to one or more of claims 1 to 12, **characterized in that** the yarn exists as a flat strip having a ratio of yarn width to yarn thickness of at least 10.

14. Textile structure comprising pre-impregnated yarns according to one or more of claims 1 to 13.

15. Textile structure according to claim 14, **characterized in that** the pre-impregnated yarns are connected to one another at points of mutual touching at least via the second resin composition.

## Revendications

1. Filé pré-imprégné constitué d'un faisceau de filaments de fibres de renfort comportant un intérieur de faisceau et une face externe de faisceau, dans lequel
- les filaments de fibres de renfort sont imprégnés d'une première composition de résines, infiltrée dans le filé pré-imprégné, et les filaments du filé pré-imprégné sont liés, au moins en partie, par l'intermédiaire de cette première composition de résines,
- laquelle première composition de résines contient au moins une résine de type polyuréthane H1, préparée par réaction d'un époxyde aromatique bifonctionnel à base de bisphénol A, d'un polyisocyanate aromatique et d'un polyalkylèneglycol, et une résine de bisphénol A alkoxylé H2,
- les résines H1 et H2 se trouvent présentes dans un rapport pondéral H1/H2 valant de 1 à 15,
- et le mélange des résines H1 et H2 présente, à température ambiante, une viscosité de 10 à 10 000 Pa.s,
**caractérisé en ce que**
- le filé pré-imprégné comporte, par rapport à son poids total, de 0,1 à 4 % en poids de la première composition de résines,
- et cette première composition de résines contient en outre un poly-hydroxy-éther aromatique P1 qui présente un indice d'acide de 40 à 55 mgKOH/g et une masse molaire moyenne M_{N} de 4000 à 5000 g/mol,
et **en ce que**
- le filé pré-imprégné comporte, au niveau de la face externe de faisceau, une deuxième composition de résines, sous forme de particules ou de gouttelettes qui adhèrent aux filaments de fibres de renfort, étant entendu que
- cette deuxième composition de résines est solide à température ambiante, présente un point de fusion situé dans l'intervalle allant de 80 à 150 °C, et se trouve sur la face externe de faisceau en une proportion de 0,5 à 14 %, en poids rapporté au poids total du filé pré-imprégné,
- une fraction d'au moins 40 % de la surface de cette face externe de faisceau ne porte pas de cette deuxième composition de résines,
- et l'intérieur de faisceau ne contient pas de cette deuxième composition de résines.

2. Filé pré-imprégné conforme à la revendication 1, **caractérisé en ce que**, dans la première composition de résines, la résine de polyuréthane H1 et la résine de bisphénol A alcoxylé H2 sont contenues en un rapport pondéral au poly-hydroxy-éther aromatique P1, (H1+H2)/P1, qui vaut de 0,05 à 20.

3. Filé pré-imprégné conforme à la revendication 1 ou 2, **caractérisé en ce que** la première composition de résines contient en outre un ester H3 d'un acide carboxylique monofonctionnel saturé à longue chaîne et d'un alcanol aliphatique monofonctionnel.

4. Filé pré-imprégné conforme à l'une ou plusieurs des revendications 1 à 3, **caractérisé en ce que** la première composition de résines contient en outre une résine de bisphénol A et d'épichlorhydrine H4 et une résine de bisphénol A et d'épichlorhydrine H5, en un rapport pondéral H4/H5 de 1,1 à 1,4, étant entendu que la résine H4, qui est solide à température ambiante, présente un indice d'époxyde de 1850 à 2400 mmol/kg et une masse molaire moyenne M_{N} de 800 à 1000 g/mol, et que la résine H5, qui est fluide à température ambiante, présente un indice d'époxyde de 5000 à 5600 mmol/kg et une masse molaire moyenne M_{N} de moins de 700 g/mol.

5. Filé pré-imprégné conforme à l'une ou plusieurs des revendications 1 à 4, **caractérisé en ce que** la première composition de résines se trouve présente en une proportion de 0,4 à 3 %, en poids rapporté au poids total du filé pré-imprégné.

6. Filé pré-imprégné conforme à l'une ou plusieurs des revendications 1 à 5, **caractérisé en ce que** la deuxième composition de résines contient, pour au moins 50 % en poids, une résine de bisphénol A et d'épichlorhydrine H6, présentant un indice d'époxyde de 480 à 645 mmol/kg et une masse molaire moyenne M_{N} de 2700 à 4000 g/mol, un poly-hydroxy-éther aromatique P2, un polyamide, un polyéthylène, un copolymère d'éthylène, ou une résine polyuréthane thermoplastique, ou un mélange de tels composés.

7. Filé pré-imprégné conforme à l'une ou plusieurs des revendications 1 à 6, **caractérisé en ce que** la deuxième composition de résines présente, à une température de 20 °C au-dessus de son point de fusion, une résistance d'adhérence d'au moins 5 N, pour une surface encollée de 25 mm de diamètre.

8. Filé pré-imprégné conforme à l'une ou plusieurs des revendications 1 à 7, **caractérisé en ce que** les particules ou gouttelettes de la deuxième composition de résines, adhérentes aux filaments de fibres de renfort, présentent une taille inférieure à 300 µm.

9. Filé pré-imprégné conforme à l'une ou plusieurs des revendications 1 à 8, **caractérisé en ce que** la proportion de la deuxième composition de résines est supérieure à celle de la première composition de résines.

10. Filé pré-imprégné conforme à l'une ou plusieurs des revendications 1 à 9, **caractérisé en ce que** la somme des proportions de la première composition de résines et de la deuxième composition de résines vaut de 1,5 à 13 %, en poids rapporté au poids total du filé pré-imprégné.

11. Filé pré-imprégné conforme à l'une ou plusieurs des revendications 1 à 10, **caractérisé en ce que** la première composition de résines et/ou la deuxième composition de résines est/sont exempte(s) de durcisseurs.

12. Filé pré-imprégné conforme à l'une ou plusieurs des revendications 1 à 11, **caractérisé en ce qu'**en fait de filé, il s'agit d'un filé de fibres de carbone, obtenu à partir de précurseurs de type brai, polyacrylonitrile, lignine ou viscose, ou d'un filé de fibres d'aramide, de verre, de céramique ou de bore, d'un filé de fibres synthétiques ou d'un filé de fibres naturelles, ou d'une combinaison de fibres de l'une ou de plusieurs de ces sortes.

13. Filé pré-imprégné conforme à l'une ou plusieurs des revendications 1 à 12, **caractérisé en ce qu'**il se présente sous la forme de ruban plat dont le rapport de la largeur de filé à l'épaisseur de filé vaut au moins 10.

14. Structure textile comprenant des filés pré-imprégnés conformes à l'une ou plusieurs des revendications 1 à 13.

15. Structure textile conforme à la revendication 14, **caractérisée en ce que** les filés pré-imprégnés sont attachés les uns aux autres, au niveau de points de contact mutuel, au moins par l'intermédiaire de la deuxième composition de résines.
